# FASCICULE DE BREVET EUROPEEN

(11) **EP 2 323 078 B1**
(45) Date de publication et mention de la délivrance du brevet: **26.09.2012**
(21) Numéro de dépôt: 10191129.5
(22) Date de dépôt: 15.11.2010
(51) Int. Cl.: G06K 19/077

(54) **Dispositif électronique sans contact, procédé de fabrication du dispositif et étiquette électronique sans contact**
Kontaktlose elektronische Vorrichtung, Herstellungsverfahren der Vorrichtung und kontaktloses elektronisches Etikett
Contactless electronic device, method for manufacturing the device and contactless electronic tag

(30) Priorité: 16.11.2009 FR 0958059
(43) Date de publication de la demande: 18.05.2011
(73) Titulaire: Oberthur Technologies, 92300 Levallois-Perret (FR)
(72) Inventeur: Bosquet, Olivier, 35500 Vitre (FR); Launay, François, 35500 Vitré (FR)
(74) Mandataire: Delumeau, François Guy

(56) Documents cités:
- WO-A2-2007/089404

## Description

La présente invention concerne le domaine technique des étiquettes électroniques de type sans contact. Elle s'applique plus précisément mais non exclusivement aux étiquettes électroniques destinées à être rapportées sur une surface métallique d'un objet.

On entend par étiquette électronique, un ensemble comprenant un support, un circuit de communication en champ proche comprenant une puce électronique et une antenne de communication en champ proche, permettant l'établissement d'une communication sans contact avec un dispositif externe pour échanger des données. L'antenne est généralement raccordée à la puce électronique et sert non seulement de moyen de communication sans contact mais également à produire l'énergie nécessaire à l'alimentation de la puce électronique.

Afin d'assurer une transmission optimale des données entre l'étiquette et le dispositif externe quel que soit l'environnement métallique de l'étiquette, l'étiquette est munie d'une couche de blindage magnétique apte à protéger le circuit de communication en champ proche.

Cela présente un intérêt particulier, notamment pour une application de « paiement sans contact » embarquée sur un téléphone mobile, le téléphone mobile comprenant une batterie et parfois même un boîtier métallique pouvant nuire grandement à la qualité de transmission de données avec un lecteur externe lorsque l'étiquette est apposée sur le téléphone.

On connaît déjà dans l'état de la technique, notamment du document WO2008/065278, une étiquette de type sans contact adaptée pour une application dans un environnement métallique (voir le préambule de la revendication 1). Dans ce document, l'étiquette comprend une couche intermédiaire réalisée en un matériau hyper conducteur magnétique, placée contre un substrat portant l'antenne et le microcircuit. L'ensemble formé par le substrat, l'antenne et le microcircuit est par la suite noyé dans une enveloppe réalisée dans une matière plastique par lamination ou moulage.

L'inconvénient de l'étiquette ainsi obtenue est qu'elle reste relativement épaisse du fait de la présence, en plus du substrat portant l'antenne et le microcircuit, de la couche intermédiaire et de l'enveloppe.

En outre, lorsque l'on souhaite fabriquer différents formats d'étiquettes, ceci peut être à l'origine de difficultés lors de la personnalisation. En effet, les équipements de personnalisation doivent généralement être réglés en fonction du format de l'étiquette à personnaliser. Par ailleurs, certains formats d'étiquette peuvent ne pas être compatibles avec les équipements de personnalisation ce qui limite considérablement la diversité des étiquettes fabriquées. Face à ces difficultés, il est fréquent que la personnalisation soit figée lors de la fabrication de la carte.

Il existe à ce jour un besoin pour une étiquette personnalisable aisément quel que soit sa forme ou son format. En outre, cette étiquette doit être adaptée pour fonctionner dans un environnement métallique tel que par exemple à proximité d'un téléphone mobile.

L'invention a notamment pour but de fournir une étiquette répondant à ce besoin.

A cet effet, l'invention a notamment pour objet un dispositif électronique sans contact comprenant une antenne de communication en champ proche délimitant une surface utile de réception d'un champ magnétique, un microcircuit raccordé à l'antenne et une couche de blindage magnétique agencée pour s'étendre au moins partiellement sous la surface de l'antenne, **caractérisé en ce qu**'il comprend un corps de carte à microcircuit comprenant une cavité ouverte sur une de ses faces s'étendant au moins partiellement sous la surface d'antenne et dimensionnée pour recevoir entièrement la couche de blindage, la couche de blindage étant fixée dans la cavité **et en ce que** le corps comprend une plaquette détachable à l'intérieur de laquelle sont agencés l'antenne et le microcircuit et à l'intérieur de laquelle la couche déblindage s'étend au moins partiellement.

Grâce à l'invention, il est facile de réaliser des étiquettes sans contact de formes fantaisies et de les personnaliser graphiquement.

En effet, du fait que la couche de blindage est entièrement logée dans une cavité ménagée dans un corps de carte à puce, l'épaisseur du corps est relativement limitée et correspond par exemple sensiblement à l'épaisseur normalisée d'une carte bancaire.

En outre, la plaquette détachable formant l'étiquette est complètement intégrée dans le support formé par le corps de carte. Le corps de carte forme ainsi un adaptateur provisoire pour personnaliser l'étiquette qui peut être séparé ultérieurement une fois la personnalisation réalisée. Ainsi, la forme de la plaquette détachable peut être fantaisie sans que la personnalisation n'en soit rendue plus complexe puisque le support de personnalisation formé par le corps de carte ne varie pas avec la forme de la plaquette.

Il est ainsi possible de personnaliser après fabrication l'étiquette sans nécessiter d'équipements de personnalisation spécifiquement dédiés au format de l'étiquette. La forme et les dimensions de l'étiquette peuvent être ainsi figées lors de la fabrication et une banque ou toute autre service souhaitant offrir des étiquettes de type sans contact peut aisément personnaliser l'étiquette après sa fabrication dès lors qu'elle forme la plaquette détachable du dispositif de l'invention.

De préférence, la couche ayant des dimensions supérieures à la surface de l'antenne, la couche est agencée pour couvrir toute la surface utile de l'antenne. Dans ce cas, la couche offre une protection optimale à l'antenne contre les perturbations magnétiques susceptibles d'être générées par un environnement métallique proche.

Dans un mode de réalisation préféré de l'invention, la cavité et la couche s'étendent au moins à travers toute la plaquette. Ceci permet notamment d'éviter des effets de bord inesthétique liés à un défaut de positionnement de la couche dans la plaquette ou à un jeu existant entre les bords latéraux de la couche et les bords de la cavité. En effet, dans ce cas, la couche couvre au moins toute la surface de la plaquette et les éventuels jeux existants entre les bords de la couche et de la cavité s'étendent dans la partie fixe du corps de carte.

Un dispositif selon l'invention peut en outre comporter l'une ou l'autre des caractéristiques selon lesquelles ;
- la plaquette détachable est délimitée par une ligne fracturable ménagée dans le corps et prévue pour permettre une séparation de la plaquette et du corps par simple pression manuelle ;
- la ligne fracturable comprend des incisions traversantes et/ou des incisions non traversantes ;
- la ligne fracturable comprend au moins une incision traversant l'épaisseur de la couche de blindage ;
- la ligne comprend deux incisions non traversantes réalisées chacune sur une des faces du corps en regard l'une de l'autre ;
- la couche est réalisée dans un matériau comprenant essentiellement de la ferrite ;
- la couche de blindage comprend sur une face orientée vers l'extérieur de la cavité un revêtement adhésif pour permettre de rapporter la plaquette détachable par collage sur une surface d'un équipement externe au dispositif ;
- la couche de blindage est rapportée par collage dans la cavité ;
- le corps de carte est formé par lamination d'une pluralité de couches dont l'une au moins incorpore l'antenne et le microcircuit ;
- le corps de carte délimite une carte de format conforme à une norme prédéfinie de cartes à microcircuit, tel que par exemple le format ID-1 de la norme ISO 7816.

L'invention a encore pour objet une étiquette électronique sans contact comprenant une antenne de communication en champ proche délimitant une surface utile de réception d'un champ magnétique, un microcircuit raccordé à l'antenne et une couche de blindage magnétique agencée pour couvrir au moins partiellement la surface utile, caractérisée en ce qu'elle forme la plaquette détachable d'un dispositif électronique selon l'invention.

L'invention a enfin pour objet un procédé de fabrication d'un dispositif selon l'invention, caractérisé en ce que l'on prévoit dans le corps de carte une partie prédéfinie incorporant l'antenne et le microcircuit, on ménage la cavité pour qu'elle s'étende au moins partiellement dans la partie prédéfinie sous la surface utile de l'antenne, la cavité étant dimensionnée pour recevoir entièrement la couche de blindage et on prédécoupe la partie prédéfinie, une fois la couche fixée dans la cavité, pour former la plaquette détachable du corps de carte.

D'autres caractéristiques et avantages de l'invention apparaîtront à la lumière de la description qui suit, faite en référence aux dessins annexés dans lesquels :
- la figure 1 représente une vue de dessous d'un dispositif électronique sans contact selon l'invention ;
- la figure 2 représente une vue en coupe selon la ligne II-II du dispositif de la figure 1 ;
- les figures 3 à 7 illustrent de façon schématique les différentes étapes de fabrication du dispositif de la figure 1 ;
- la figure 8 représente un téléphone mobile portant une étiquette électronique sans contact formant une plaquette détachable du dispositif de la figure 1.

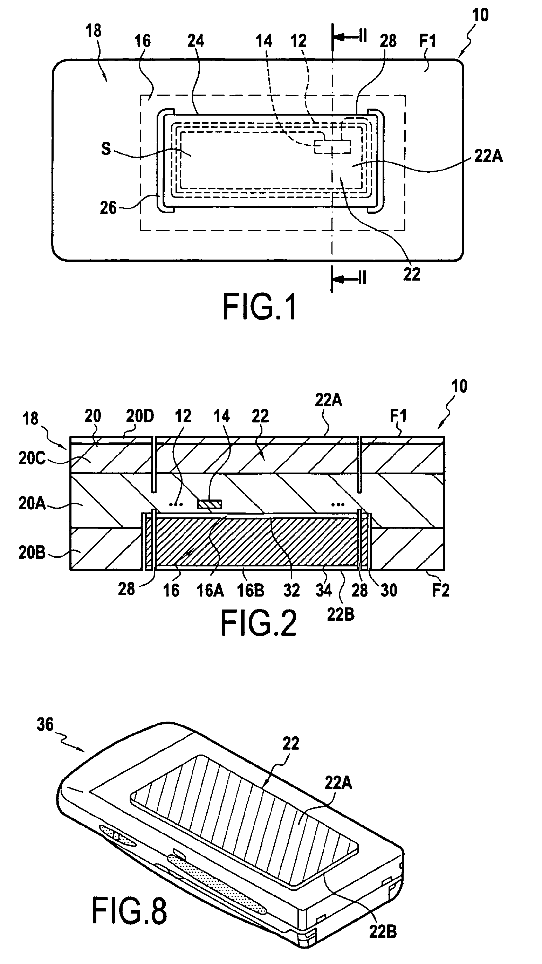

On a représenté sur **les** **figures 1 et 2** un dispositif électronique sans contact selon l'invention. Ce dispositif est désigné par la référence générale 10.

Ce dispositif 10 comprend une antenne de communication en champ proche 12 et un microcircuit 14 raccordé à l'antenne 12 visibles par transparence (en trait pointillé sur **la** **figure 1**). Le microcircuit 14 et l'antenne 12 forment ensemble des moyens de communication en champ proche aptes à communiquer avec un équipement externe tel qu'un lecteur spécialisé. Par exemple, les moyens de communication en champ proche du dispositif 10 et le lecteur sont aptes à communiquer conformément au protocole de communication ISO 14 443.

L'antenne 12 est formée par exemple par une pluralité de spires électriquement conductrices et délimite une surface utile S de réception d'un champ magnétique.

Par surface utile S, on entend au sens de l'invention, la surface de l'antenne 12 qui traversée par un champ magnétique produit un courant induit circulant dans l'antenne 12.

En outre, le dispositif 10 comprend une couche de blindage magnétique 16 agencée pour s'étendre au moins partiellement sous la surface S de l'antenne 12. Une telle couche 16 permet notamment de réduire les perturbations magnétiques générées par un environnement métallique situé à proximité du dispositif électronique 10. La couche 16 est réalisée par exemple dans un matériau électriquement isolant et magnétiquement perméable tel que par exemple de la ferrite. L'épaisseur de la couche est comprise entre par exemple 200 et 300 microns et sa perméabilité relative est d'environ 100.

De préférence, la couche 16 a des dimensions supérieures à la surface S de l'antenne et est agencée dans le dispositif 10 pour la couvrir sur toute sa surface S.

Plus précisément, le dispositif 10 comprend un support 18 formé dans un corps de carte à microcircuit 20.

Par exemple, le corps de carte 20 est réalisé dans une matière plastique telle que du PVC ou encore du PC (polycarbonate). Ce corps de carte 20 est de préférence réalisée par lamination de couches de matière plastique entre elles.

Dans un mode de réalisation préféré de l'invention, le corps 20 comprend une couche centrale 20A dite « inlay » incorporant l'antenne 12 et le microcircuit 14, intercalée entre deux couches dite inférieure 20B et supérieure 20C et désignée couramment par « core layer » et enfin une couche de protection 20D disposée sur la couche supérieure 20C et étant généralement réalisée dans une matière plastique transparente aux rayons visibles.

Préférentiellement, le corps de carte 20 délimite des dimensions extérieures conformes à un format normalisé de cartes à microcircuit, par exemple le format ID-1 de la norme ISO 7816. Ce corps 20 est délimité par des première F1 et deuxième F2 faces.

Plus particulièrement, le corps 20 comprend une cavité 30 ouverte sur la face F2 du corps 20 qui s'étend au moins partiellement sous la surface d'antenne S. Cette cavité 30 est dimensionnée pour recevoir entièrement la couche de blindage 16. De préférence, la couche de blindage 16 affleure la surface du corps de carte 20. Dans l'exemple décrit, la couche de blindage 16 est rapportée par collage à l'intérieur de la cavité 30. A cet effet, la couche de blindage 16 comprend sur une première face 16A destinée à être orientée à l'intérieur de la cavité 30 un premier revêtement adhésif 32.

En outre, le corps 20 comprend une plaquette détachable 22 à l'intérieur de laquelle sont agencés l'antenne 12 et le microcircuit 14 et à l'intérieur de laquelle s'étend au moins partiellement la couche de blindage 16 logée dans la cavité 30. Cette plaquette détachable 22 forme une étiquette électronique sans contact au sens de l'invention.

Par exemple, la plaquette 22 est délimitée par une ligne fracturable 24 ménagée dans le corps 20 et prévue pour permettre une séparation de la plaquette 22 et du corps 20 par simple pression manuelle le long de cette ligne 24. Par exemple, la ligne 24 comprend des incisions traversantes 26 et/ou des incisions non traversantes 28.

Dans l'exemple illustré, la plaquette 22 a une forme générale sensiblement rectangulaire et des incisions traversantes 26 sont formées le long des petits bords latéraux et des incisions non traversantes 28 sont formées le long des grands bords latéraux du rectangle formant la plaquette 22.

Dans l'exemple illustré et de façon préférentielle, la cavité 30 et la couche de blindage 16 s'étendent au moins à travers toute la plaquette 22, par exemple en dépassant de part et d'autre de la périphérie de la plaquette 22. Ainsi, la ligne fracturable 24 s'étend en partie sur la couche de blindage 16 et cette ligne 24 comprend au moins une incision traversant l'épaisseur de la couche de blindage 16.

En outre, la couche de blindage 16 comprend sur une deuxième face 16B destinée à être orientée vers l'extérieur de la cavité 30, un deuxième revêtement adhésif 34 pour permettre de rapporter la plaquette détachable 22 sur une surface d'un équipement externe au dispositif 10 affleure la surface du corps 20. De préférence, ce deuxième revêtement adhésif 34 est muni d'un film non adhésif retirable pour faciliter la manipulation du dispositif 10 et éviter l'accumulation de poussières ou particules sur le revêtement 34.

Comme cela est illustré sur **la** **figure 2****,** l'épaisseur des premier et deuxième revêtements adhésifs 32 et 34 est prise en compte pour dimensionner la cavité 30. Ainsi, dans l'exemple décrit, le deuxième revêtement 34 affleure la surface du corps de carte 20.

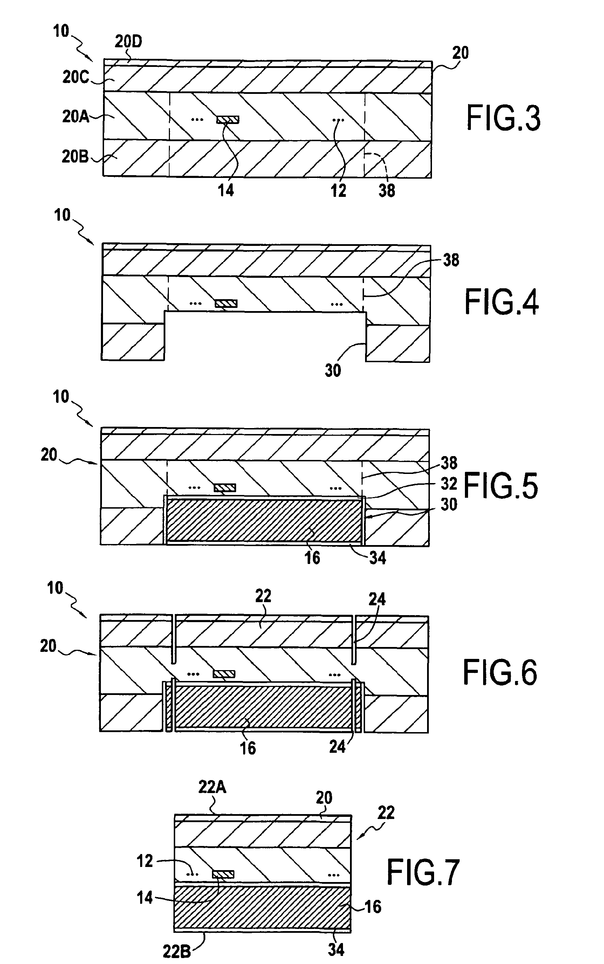

La plaquette, une fois détachée **(****figure 7****),** forme une étiquette électronique sans contact 22 présentant une face de lecture 22A à partir de laquelle des données peuvent être échangées entre les moyens de communication à champ proche et un lecteur externe et une face de blindage 22B apte à limiter toutes interférences susceptible d'être générées par un objet sur lequel l'étiquette 22 est apposée.

Par exemple, la plaquette détachable 22 incorpore une fonction électronique de paiement sans contact et est destinée à être rapportée par collage sur un terminal de téléphonie mobile 36, comme cela est illustré sur **la** **figure 8****.** On voit notamment sur cette figure, que l'étiquette 22 est collée sur le dos de ce téléphone 36.

On a représenté sur **les** **figures 3 à 7** différentes étapes d'un procédé de fabrication du dispositif de **la** **figure 1****.**

Tout d'abord, on forme le corps de carte 20, par exemple par lamination d'une pluralité de couches 20a à 20D entre elles **(****figure 3****).** On prévoit dans le corps de carte 20 une partie prédéfinie 38 incorporant l'antenne 12 et le microcircuit 14.

Puis, le procédé comprend une étape d'usinage d'une cavité 30 dans le corps de carte 20 **(****figure 4****).** De façon plus précise, on ménage cette cavité 30 pour qu'elle s'étende au moins partiellement dans la partie prédéfinie 38 sous la surface utile S de l'antenne. Comme on peut le voir sur **la** **figure 4****,** la cavité 30 s'étend à travers toute la partie prédéfinie 38 en débordant sur la périphérie de cette dernière.

Puis, le procédé comprend une étape de fixation de la couche de blindage magnétique 16 à l'intérieur de la cavité 30 illustrée par **la** **figure 5****.** De préférence, cette couche de ferrite 16 est rapportée par collage à l'intérieur de la cavité 30. En outre, la couche de blindage comprend sur la face opposée à la face collée au fond de la cavité le deuxième revêtement adhésif 34 muni d'un film anti-adhésif retirable.

Enfin, le procédé comprend une étape de prédécoupage de la partie prédéfinie 38 pour former la plaquette détachable du corps de carte comme cela est illustré par **la** **figure 6****.** Dans le mode de réalisation préféré de l'invention, cette étape de prédécoupage consiste en la formation d'une ligne fracturable 24 permettant la séparation de la plaquette 22 et du corps 20 par simple pression manuelle.

Du fait que la couche de blindage 16 est incorporée dans un support formé par un corps de carte à microcircuit, l'épaisseur du support est relativement réduite.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Dispositif électronique sans contact (10) comprenant une antenne de communication en champ proche (12) délimitant une surface utile (S) de réception d'un champ magnétique, un microcircuit (14) raccordé à l'antenne (12) et une couche de blindage magnétique (16) agencée pour s'étendre au moins partiellement sous la surface (S), **caractérisé en ce qu'**il comprend un corps de carte à microcircuit (20) comprenant une cavité ouverte (30) sur une de ses faces (F2) s'étendant au moins partiellement sous la surface d'antenne (S) et dimensionnée pour recevoir entièrement la couche de blindage (16), la couche de blindage étant fixée dans la cavité et **en ce que** le corps (20) comprend une plaquette détachable (22) à l'intérieur de laquelle sont agencés l'antenne (12) et le microcircuit (14) et à l'intérieur de laquelle la couche de blindage (16) s'étend au moins partiellement.

2. Dispositif (10) selon la revendication précédente, dans lequel la couche de blindage (16) ayant des dimensions supérieures à la surface (S) de l'antenne, la couche de blindage (16) est agencée pour couvrir toute la surface utile (S) de l'antenne (12).

3. Dispositif (10) selon l'une ou l'autre des revendications précédentes, dans lequel la cavité (30) et la couche de blindage (16) s'étendent au moins à travers toute la plaquette (22).

4. Dispositif (10) selon l'une quelconque des revendications précédentes, dans lequel la plaquette détachable (22) est délimitée par une ligne fracturable (24) ménagée dans le corps (20) et prévue pour permettre une séparation de la plaquette (22) et du corps (20) par simple pression manuelle.

5. Dispositif (10) selon la revendication précédente, dans lequel la ligne fracturable (24) comprend des incisions traversantes (26) et/ou des incisions non traversantes (28).

6. Dispositif (10) selon la revendication 4 ou 5, dans lequel la ligne fracturable (24) comprend au moins une incision (26, 28) traversant l'épaisseur de la couche de blindage (16).

7. Dispositif (10) selon l'une quelconque des revendications 4 à 6, dans lequel la ligne fracturable (24) comprend deux incisions non traversantes (28) réalisées chacune sur une des faces (F1, F2) du corps decarte (20) en regard l'une de l'autre.

8. Dispositif (10) selon l'une quelconque des revendications précédentes, dans lequel la couche de blindage (16) est réalisée dans un matériau comprenant essentiellement de la ferrite.

9. Dispositif (10) selon l'une quelconque des revendications précédentes, dans lequel la couche de blindage (16) comprend sur une face orientée (16B) vers l'extérieur de la cavité (30) un revêtement adhésif (34) pour permettre de rapporter la plaquette détachable (22) par collage sur une surface d'un équipement externe au dispositif (10).

10. Dispositif (10) selon l'une quelconque des revendications précédentes, dans lequel la couche de blindage (16) est rapportée par collage dans la cavité (30).

11. Dispositif (10) selon l'une quelconque des revendications précédentes, dans lequel le corps de carte (20) est formé par lamination d'une pluralité de couches (20A, 20B, 20C, 20D) dont l'une au moins incorpore l'antenne (12) et le microcircuit (14).

12. Dispositif (10) selon l'une quelconque des revendications précédentes, dans lequel le corps de carte (20) délimite une carte de format conforme à une norme prédéfinie de cartes à microcircuit, tel que par exemple le format ID-1 de la norme ISO 7816.

13. Etiquette électronique sans contact (22) comprenant une antenne de communication en champ proche (12) délimitant une surface utile (S) de réception d'un champ magnétique, un microcircuit (14) raccordé à l'antenne (12) et une couche de blindage magnétique (16) agencée pour couvrir au moins partiellement la surface utile (S), **caractérisée en ce que** l'étiquette forme la plaquette détachable (22) d'un dispositif électronique (10) selon l'une quelconque des revendications précédentes.

14. Procédé de fabrication d'un dispositif (10) selon l'une quelconque des revendications 1 à 12, **caractérisé en ce que** l'on prévoit dans le corps de carte (20) une partie prédéfinie (38) incorporant l'antenne (12) et le microcircuit (14), on ménage la cavité (30) pour qu'elle s'étende au moins partiellement à l'intérieur de la partie prédéfinie (38) sous la surface utile (S) de l'antenne (12), la cavité (30) étant dimensionnée pour recevoir entièrement la couche de blindage (16) et on prédécoupe la partie prédéfinie (38), une fois la couche (16) fixée dans la cavité (30), pour former la plaquette détachable (22) du corps de carte (20).

## Claims

1. A contactless electronic device (10) including a near-field communication antenna (12) delimiting a usable magnetic field receiving area (S), a microcircuit (14) connected to antenna (12) and a magnetic shielding layer (16) arranged so as to extend at least partially under the area (S), wherein is included a support (18) built into a microcircuit card body (20) including an open cavity (30) on one of its faces (F2) extending at least partially below the antenna area (S) and sized so as to completely accommodate the shielding layer (16), and wherein the body (20) includes a detachable plate (22) within which are arranged the antenna (12) and the microcircuit (14) and within which the shielding layer (16) extends at least partially.

2. A device (10) according to the foregoing claim, in which, the shielding layer (16) having dimensions greater than the area (S) of the antenna, the shielding layer (16) is arranged so as to cover the entire usable area (S) of the antenna (12).

3. A device (10) according to one or the other of the foregoing claims, in which the cavity (30) and the shielding layer (16) extend at least through the entire plate (22).

4. A device (10) according to any one of the foregoing claims, in which the detachable plate (22) is delimited by a breakable line (24) built into the body (20) and provided to allow separation of the plate (22) from the body (20) by manual pressure alone.

5. A device (10) according to the previous claim, in which the breakable line (24) includes through incisions (26) and/or partial depth incisions (28).

6. A device (10) according to Claim 4 or 5, in which the breakable line (24) includes at least one incision (26, 28) passing through the entire thickness of the shielding layer (16).

7. A device (10) according to any one of Claims 4 through 6, in which the breakable line (24) includes two partial-depth incisions (28), each made in one of the faces (F1, F2) of the card body (20) opposite one another.

8. A device (10) according to any one of the foregoing claims, in which the shielding layer (16) is made of a material consisting essentially of ferrite.

9. A device (10) according to any one of the foregoing claims, in which the shielding layer (16) includes, on a face (16B) oriented toward the outside of the cavity (30), an adhesive coating (34) to allow the detachable plate (22) to be attached by gluing onto a surface of a piece of equipment external to the device (10).

10. A device (10) according to any one of the foregoing claims, in which the shielding layer (16) is attached by gluing within the cavity (30).

11. A device (10) according to any one of the foregoing claims, in which the card body (20) is made by lamination of a plurality of layers (20A, 20B, 20C, 20D), of which at least one incorporates the antenna (12) and the microcircuit (14).

12. A device (10) according to any one of the foregoing claims, in which the card body (20) delimits a card with a format that complies with a predefined microcircuit card standard, such as the ID-1 format of the ISO 7816 standard for example.

13. A contactless electronic tag (22) including a near-field communication antenna (12) delimiting a usable magnetic field receiving area (S), a microcircuit (14) connected to the antenna (12) and a magnetic shielding layer (16) arranged so as to cover at least partially the usable area (S), wherein the tag constitutes the detachable plate (22) of an electronic device (10) according to any one of the foregoing claims.

14. A manufacturing process for a device (10) according to any one of Claims 1 through 12, wherein a predefined part (38) is provided in the card body (20), incorporating the antenna (12) and the microcircuit (14), the cavity (30) is arranged so that it extends at least partially within the predefined part (38) under the usable surface (S) of the antenna (12), the cavity (30) being sized so as to completely accommodate the shielding layer (16) and the predefined part (38) is pre-cut once the layer (16) is attached within the cavity (30) to constitute the detachable plate (22) of the card body (20).

## Patentansprüche

1. Kontaktlose elektronische Vorrichtung (10), umfassend eine Nahfeldkommunikationsantenne (12), die eine Nutzfläche (S) zur Aufnahme eines Magnetfeldes begrenzt, einen Mikroschaltkreis (14), der mit der Antenne (12) verbunden ist, sowie eine Schicht zur magnetischen Abschirmung (16), die angeordnet ist, um wenigstens teilweise unter der Fläche (S) zu verlaufen, **dadurch gekennzeichnet, daß** sie einen Kartenkörper mit Mikroschaltkreis (20) umfaßt, der einen auf einer seiner Seiten (F2) offenen Hohlraum (30) aufweist, der sich wenigstens teilweise unter der Antennenfläche (S) erstreckt und bemessen ist, um die Abschirmungsschicht (16) vollständig aufzunehmen, wobei die Abschirmungsschicht in dem Hohlraum befestigt ist, und daß der Körper (20) ein ablösbares Plättchen (22) umfaßt, in dem die Antenne (12) und der Mikroschaltkreis (14) angeordnet sind und in dem die Abschirmungsschicht (16) wenigstens teilweise verläuft.

2. Vorrichtung (10) nach dem vorhergehenden Anspruch, wobei - da die Abschirmungsschicht (16) größere Abmessungen als die Fläche (S) der Antenne aufweist - die Abschirmungsschicht (16) angeordnet ist, um die gesamte Nutzfläche (S) der Antenne (12) zu bedecken.

3. Vorrichtung (10) nach dem einen oder dem anderen der vorhergehenden Ansprüche, wobei der Hohlraum (30) und die Abschirmungsschicht (16) wenigstens durch das gesamte Plättchen (22) verlaufen.

4. Vorrichtung (10) nach einem der vorhergehenden Ansprüche, wobei das ablösbare Plättchen (22) durch eine aufbrechbare Linie (24) begrenzt ist, die in dem Körper (20) ausgebildet und vorgesehen ist, um ein Trennen des Plättchens (22) und des Körpers (20) durch einfaches manuelles Drücken zu ermöglichen.

5. Vorrichtung (10) nach dem vorhergehenden Anspruch, wobei die aufbrechbare Linie (24) durchgehende Einschnitte (26) und/oder nicht durchgehende Einschnitte (28) umfaßt.

6. Vorrichtung (10) nach Anspruch 4 oder 5, wobei die aufbrechbare Linie (24) wenigstens einen die Dicke der Abschirmungsschicht (16) durchquerenden Einschnitt (26, 28) umfaßt.

7. Vorrichtung (10) nach einem der Ansprüche 4 bis 6, wobei die aufbrechbare Linie (24) zwei nicht durchgehende Einschnitte (28) umfaßt, die jeweils auf einer der einander gegenüberliegenden Seiten (F1, F2) des Kartenkörpers (20) ausgebildet sind.

8. Vorrichtung (10) nach einem der vorhergehenden Ansprüche, wobei die Abschirmungsschicht (16) aus einem im wesentlichen Ferrit umfassenden Material ausgebildet ist.

9. Vorrichtung (10) nach einem der vorhergehenden Ansprüche, wobei die Abschirmungsschicht (16) auf einer zur Außenseite des Hohlraums (30) gerichteten Seite (16B) eine Haftbeschichtung (34) umfaßt, um zu ermöglichen, das ablösbare Plättchen (22) durch Kleben an eine Fläche einer außerhalb der Vorrichtung (10) befindlichen Einrichtung anzusetzen.

10. Vorrichtung (10) nach einem der vorhergehenden Ansprüche, wobei die Abschirmungsschicht (16) durch Kleben in den Hohlraum (30) eingesetzt ist.

11. Vorrichtung (10) nach einem der vorhergehenden Ansprüche, wobei der Kartenkörper (20) durch Aufschichtung einer Vielzahl von Schichten (20A, 20B, 20C, 20D), in wenigstens eine derer die Antenne (12) und der Mikroschaltkreis (14) eingebettet sind, gebildet ist.

12. Vorrichtung (10) nach einem der vorhergehenden Ansprüche, wobei der Kartenkörper (20) eine Karte mit einem Format gemäß einer vordefinierten Norm für Karten mit Mikroschaltkreis, wie zum Beispiel dem ID-1-Format der Norm ISO 7816 begrenzt.

13. Kontaktloses elektronisches Etikett (22), umfassend eine Nahfeldkommunikationsantenne (12), die eine Nutzfläche (S) zur Aufnahme eines Magnetfeldes begrenzt, einen Mikroschaltkreis (14), der mit der Antenne (12) verbunden ist, sowie eine Schicht zur magnetischen Abschirmung (16), die angeordnet ist, um die Nutzfläche (S) wenigstens teilweise zu bedecken, **dadurch gekennzeichnet, daß** das Etikett das ablösbare Plättchen (22) einer elektronischen Vorrichtung (10) nach einem der vorhergehenden Ansprüche bildet.

14. Verfahren zur Herstellung einer Vorrichtung (10) nach einem der Ansprüche 1 bis 12, **dadurch gekennzeichnet, daß** in dem Kartenkörper (20) ein vordefinierter Teil (38) vorgesehen ist, in den die Antenne (12) und der Mikroschaltkreis (14) eingebettet sind, der Hohlraum (30) ausgebildet wird, damit er sich wenigstens teilweise innerhalb des vordefinierten Teils (38) unter der Nutzfläche (S) der Antenne (12) erstreckt, wobei der Hohlraum (30) bemessen ist, um die Abschirmungsschicht (16) vollständig aufzunehmen, und der vordefinierte Teil (38), sobald die Schicht (16) in dem Hohlraum (30) befestigt ist, vorgeschnitten wird, um das von dem Kartenkörper (20) ablösbare Plättchen (22) zu bilden.
